# EUROPEAN PATENT APPLICATION

(11) **EP 2 223 892 A1**
(43) Date of publication of application: **01.09.2010**
(21) Application number: 09152392.8
(22) Date of filing: 09.02.2009
(51) Int. Cl.: C01B 31/20, C01D 7/35, B01J 6/00, F26B 11/04

(54) **Process for producing gas from mineral ore**

(71) Applicant: Solvay SA, 1050 Brussels (BE)
(72) Inventor: Coustry, Francis, 1652 Alsemberg (BE); Davoine, Perrine, 1020 Brussels (BE); Criado, Claude, 1180 Brussels (BE); Chau, Thoi-Dai, 54110 Dombasle-sur-Meurthe (FR)
(74) Representative: Vande Gucht, Anne

(57) **Abstract**

Process for producing a gas from a mineral ore, and in particular from trona ore, said gas having a carbon dioxide concentration of more than 25 volume percents expressed on dry gas, and a quantity of volatile organic compounds of less than 700 mg per kilogram of generated carbon dioxide. The process comprises the steps of crushing the trona ore, introducing crushed trona in a rotary calcining drum with indirect heating, extracting from calcining device the calcined trona and extracting from calcining device the gas generated by the trona ore calcination in order to constitute the produced gas.

## Description

### FIELD OF THE INVENTION

This invention relates to a process for producing gas from mineral ore, particularly from trona ore, the produced gas, and uses of this gas.

### BACKGROUND OF THE INVENTION

Trona ore is a mineral that contains about 90-95 % sodium sesquicarbonate (Na₂CO₃.NaHCO₃.₂H₂O). A vast deposit of mineral trona is found in southwestern Wyoming near Green River. This deposit includes beds of trona and mixed trona and halite (rock salt or NaCl) which covers approximately 2,600 km². The major trona beds range in size from less than 428 km² to at least 1,870 km². By conservative estimates, these major trona beds contain about 75 billion metric tons of ore. The different beds overlap each other and are separated by layers of shale, and oil shales. The quality of the trona varies depending on its particular location in the stratum.

A typical analysis of the trona ore mined in Green River is as follows:

**TABLE 1**

| Constituent | Weight Percent |
|---|---|
| Na₂CO₃ | 43.6 |
| NaHCO₃ | 34.5 |
| H₂O (crystalline and free moisture) | 15.4 |
| NaCl | 0.01 |
| Na₂SO₄ | 0.01 |
| Fe₂O₃ | 0.14 |
| Insolubles | 6.3 |
| Organics | 0.3 |

The sodium sesquicarbonate found in trona ore is a complex salt that is soluble in water. The trona ore is processed to remove the insoluble material, the organic matter and other impurities to recover the valuable alkali contained in the trona.

The most valuable alkali produced from trona is sodium carbonate. Sodium carbonate is one of the largest volume alkali commodities made in the United States. In 2007, trona-based sodium carbonate from Wyoming comprised about 90 % of the total U.S. soda ash production. Sodium carbonate finds major use in the glass-making industry and for the production of baking soda, detergents, paper products.

A common method to produce sodium carbonate from trona ore is known as the "monohydrate process".

In that process, crushed trona ore is calcined (i.e. heated) into crude sodium carbonate which is then dissolved in water. The resulting water solution is purified and fed to a crystallizer where pure sodium carbonate monohydrate crystals are crystallized.

During calcination, the sodium sesquicarbonate molecules present in trona ore breaks down into solid sodium carbonate, and gaseous carbon dioxide and water vapor. Organics present in natural ore, are partially degraded. Part of the organics remain in the calcined ore, part of organics are released in resultant calcined gas or vapors.

A typical design for trona calciners is direct firing rotary calciners (Natural Soda Ash, D.E. Garett, Ed Van Nostrand Reinhold editor, New York, 1992, Chapter 8 Production pp 270-275). The direct firing is operated with air and natural gas or grinded coal: the hot burning gases are injected in the rotary calciner. The hot direct firing gases contain air excess to enable a correct combustion of natural gas or coal, plus the non reacted nitrogen (N₂) from combustion air, plus some common gaseous pollutants formed by the flame combustion such as nitrogen oxides, and sulfur oxides. During trona calcination, generated water vapor, carbon dioxide gas, and volatile organic compounds are diluted with the hot direct firing gases. The resulting gas present in the calciner, and emitted by the calciner, contains firing gases plus the gases generated by trona calcination. For that reason they are diluted in carbon dioxide (from 10 to 15 volume % on dry gas). This diluted gas can be dedusted and washed to remove calcined trona particules and then release into atmosphere.

One other use of sodium carbonate is the production of sodium bicarbonate (baking soda). Sodium bicarbonate is a product with a wide range of interesting properties and a wide range of applications from high purity for the pharmaceutical industry to the human food and animal feed, and to the use of technical grade for chemical industry.

The production of sodium bicarbonate is currently almost entirely made by the carbonation of sodium carbonate.

In the USA, the carbonation is usually made in separate plants which purchase independently the soda ash and the CO₂ and combine them.

The carbon dioxide production is traditionally recovered from other processes and distributed most commonly as liquid carbon dioxide. Large amounts of carbon dioxide are recovered from naturally occurring underground sources. This underground carbon dioxide can be almost 100% pure with a small percentage of a mixed-gas stream. Such carbon dioxide is often use in beverage or pharmaceutical industries.

Liquid carbon dioxide is also recovered as a gaseous by-product of industrial operations such as: hydrogen production for ammonia by steam reforming of natural gas, ethylene oxide production, or ethanol production by fermentation. The gaseous carbon dioxide is compressed and piped in nearby plants or it is liquefied for sale as a merchant product because liquid carbon dioxide can be transported more economically than gaseous.

Since the carbon dioxide generated by existing lines of trona calcination is diluted and polluted by several gaseous pollutants, its use for making other pure chemicals such as food and pharmaceuticals is not relevant.

Some tentative have been described to improve the calcining step of the monohydrate process by using fluidized bed technology. US6479025 describes an apparatus for the calcination where the calcining chamber contains indirect heating elements, a bed plate located below the heating elements, and a plurality of holes for introducing fluidizing gas. The amount of soluble organics generated in the calcined trona is mentioned to be low.

Such equipments have the disadvantage to need a selective crushing with a narrow particle size range of the mineral ore: coarser particles will fall onto the plate if their weight is too heavy to be fluidized, and so will need a longer time to be removed from the calciner, and the finer particles that are light will be taken away with the fluidized gas and will remove high amount of materials from calcining chamber. This dusted gas will have to be settled down or filtrated by expensive equipments. In a low temperature fluidized bed, oil shales particles, that have a higher density that the one of calcined trona, are less fluidized than calcined, or partially calcined, trona particles. Being less fluidized, they remain a longer time in the calciner than calcined ore. This longer residence time is detrimental to volatile organics compounds content of the gas generated by the trona calcination: volatile organics present in oil shales will be freed in a more important quantity in the gas.

### BRIEF DESCRIPTION OF THE DRAWING

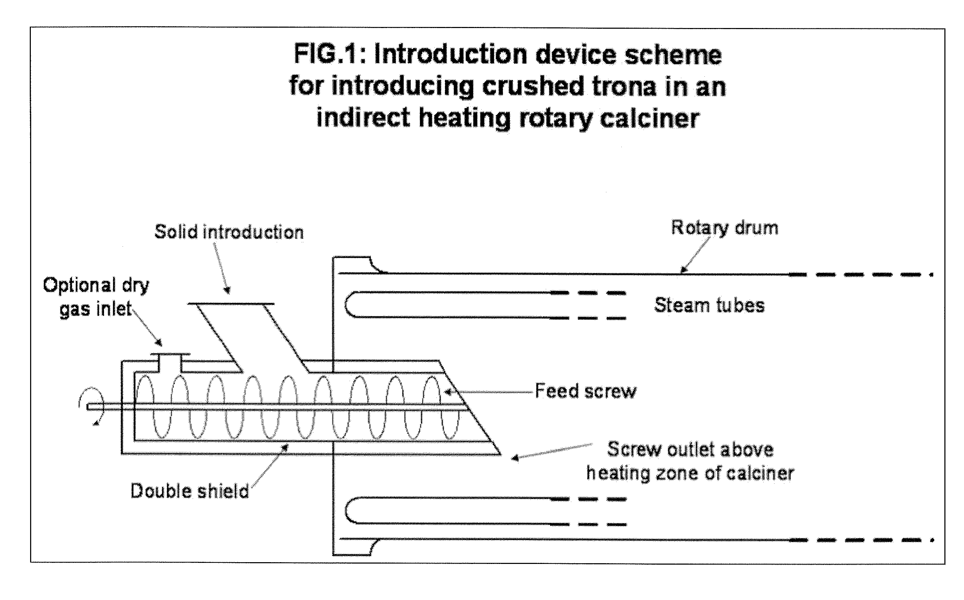

Fig. 1 is a scheme of one embodiment of the present invention of an introduction device for introducing crushed trona ore in an indirect heating calciner.

### DESCRIPTION OF THE INVENTION

One embodiment of the present invention is a process for producing a gas from a mineral ore, and in particular from trona ore, said gas having a carbon dioxide concentration of more than 25 volume percents expressed on dry gas, and a reduced quantity of volatile organic compounds expressed in mg of carbon per kilogram of generated carbon dioxide of less than 700 mg/ kg, comprising the steps of:
a) crushing the trona ore
b) introducing crushed trona in a calcining device
c) extracting from calcining device the calcined trona
d) extracting from calcining device the gas generated by the trona ore calcination in order to constitute the produced gas.
wherein said calcining device is a rotary drum with indirect heating.

The increased purity of the gas enables its use now in a variety of other applications.

The ore is crushed at a size below 1.3 cm (0,5 inch) or more preferably 0,7 cm (0,25 inch). This size reduction can be operated with a roll, a hammer, or an impact mill. The milling device can be associated with a granulometry classifier or a screening step to avoid very coarse particles to be introduced in the rotary indirect calciner.

The ore can be enriched by standard mining techniques selected from magnetic separation, electrostatic separation, flotation, density separation or a combination thereof. This enrichment can be done, during crushing operation or before introducing the crushed ore in the calciner. This ore enrichment or purification may be operated if the sodium sesquicarbonate content is low, or if an impurity has to be removed in order to generate a lower concentration of this impurity in the produced gas or the produced calcined trona.

The crushed ore is then introduced in a rotary indirect heating calciner. Preferably the rotary indirect heating calciner comprises a rotary drum equipped with and indirect heating element.

Such indirect heating rotary drums, frequently used in soda ash industry for Solvay process, are not used in the natural soda ash industry for ore calcining. Crushed trona ore is coarser than typical refined light soda ash or sodium monohydrate carbonate particles. Ore inlet plugging, and ore plugging between steam tubes, is an important issue as it decreases operation time. Inventions have tried to solve the plugging issue at the product inlet or between heating tubes such as US2851792 or GB799251, in which part of the dried or partially dried particulate solids is recycled to the input of the drum.

In present invention, the ore introduction can be a simple inlet chute. In a preferred embodiment of the invention, the crushed trona feeding is operated with a device that limits air introduction in the calciner.

The amount of air introduced in the calcining device is such that produced calcined trona gas has a carbon dioxide concentration of more than 25 volume % expressed on dry gas. The amount of air introduced in the calcining device can be further limited, as to obtain a carbon dioxide concentration expressed on dry gas of : more than 40 volume %, preferably more than 60 volume % and most preferably more than 80 volume %.

The crushed trona feeding device that limits air introduction in the calciner can be a rotary valve or a screw, or the association of those two equipments.

In a preferred embodiment, the crushed trona feeding device is a screw and the crushed trona outlet of the screw is localized in the heated section of the rotary calcining device. In that manner the cool crushed trona falls on an already heated product. This can be performed if the crushed trona falls on a section of the rotary drum where indirect heating elements are present with already heated crushed trona. Fig. 1 illustrates one of such configuration.

The introduction device can advantageously be equipped with a local heating system enabling to raise the temperature of the equipment exterior wall in contact with the calciner gas atmosphere. Particularly, the temperature of the equipment exterior wall is heated above the dew point temperature of the calciner atmosphere. This avoids that the introduction device be covered with condensates that will provoke crusts and avoid the plugging of the crushed trona outlet. Advantageously the temperature of the equipment exterior wall is above about 70°C, and preferably above about 80°C.

In one embodiment of the invention, the crushed trona can be pre-heated before its introduction in the calcining device. The pre-heating raises also the temperature of the crushed trona above the dew point temperature of the calciner atmosphere. In this case, the temperature of the heated trona is above about 70°C, or preferably above about 80°C.

The pre-heating of the crushed trona can be realized with a recycling loop of already hot calcined trona; it can be done also with a pre-heating equipment using infra-red, microwave, or hot gas injection inside the crushed trona chute or inside the crushed trona introduction device, for example in the dry gas inlet mentioned in Fig.1.

The indirect heat of the calciner device can be brought by the outer wall of the drum if it is heated externally. The indirect heat of the calciner device can also be brought with internal heating elements such as steel tubes heated with a hot fluid. The hot fluid can be a hot liquid as oil, or a hot gas as water steam.

In a preferred embodiment the heating elements are steel tubes heated with pressurized water steam. The steel tubes can be smooth tubes or be externally shaped with an outer wall that increases the outer surface such as finned tubes, grooved tubes or otherwise machined tubes. When finned tubes are used, welded helical stripes are sufficiently thick to bring mechanical resistance, and a pitch distance of the helical stripe is chosen at least three times the coarser trona particles size, to avoid plugging of the product in the stripes.

The tubes can be arranged in tubes bundles. The minimal distance between the inner wall of the drum and the outer wall of the tubes will be three times the coarser trona particles size to avoid coarse particles plugging. Also the minimal distance between the outer wall or most external point of the tubes surfaces of two adjacent tubes will be three times the coarser trona particles size to avoid coarse particles being plugged between two tubes.

The rotary drum can have its axis slightly inclined to the horizontal, for example with a slope of the order of 0.10 to 4.0%. The drum is subjected to slow rotation, that homogenizes the particles distribution in the drum and renewed particles contact with the heating elements. The trona ore particles reach thereof a temperature slightly higher than the temperature of transition of sesquicarbonate to sodium carbonate, for example a temperature from 2° to 40°C higher. The rotary movement allows calcined trona particles to progressively reach the extremity of the drum where they are removed.

Internal surface of the rotary drum can be equipped with lifting flights in part of the sections of the drum to improve particle mixing and movement of solid particles downstream.

If minimum sodium sesquicarbonate content is desired in the calcined product, suitable heating elements surface and heating fluid temperature have to be adjusted in order to reach a minimum final temperature of the calcined trona. For example to have less than 1 weight % of non calcined sodium sesquicarbonate, a suitable end temperature of the solid has to be adjusted between 130°C and 180°C, more advantageously between 150 and 170°C.

To ensure the necessary residence time of the particles within the drum, the downstream extremity of the rotary drum can be equipped at its outlet with a diaphragm disk concentric to the drum axis, that ensure a level of the particles inside the rotary drum.

The generated gas of trona particles is removed from the calciner via known technique, for example by pumping under slight vacuum the gas. The drum gas outlet is generally equipped with a decantation chamber or a dedusting cyclones device to enable most of particles to be recovered in the calcined trona outlet. The tubes and equipments in contact with the humid trona calcination gas are maintained at a temperature above the dew point temperature in order to avoid water vapor to condensate on the tube or equipment walls. This can be achieved with tubes and equipment insulation. Or if those equipments are exposed to cooler temperatures they can be equipped with known heating tracing devices between external walls of tubes and the insulation.

The obtained roughly dedusted gas can be finely dedusted with known techniques, as for example electrostatic precipitators or bag filters. The surface temperatures of those equipments are maintained also higher than the dew point temperature of the gas.

The calcined gas can be then cooled with known techniques such as gas scrubber or plate type vapor condensers in order to remove part of the water contained in the gas and being able to compress and transport the gas.

For sodium bicarbonate production it can be used as such: water content lower than 60 volume % is preferred.

With the association of the above mentioned steps of the process and the above characteristics of the calcining device, it has been found surprisingly than the calcined trona gas has a composition of particularly higher quality that the one produced with already existing equipments.

Although not desiring to be bound by a theoretical explanation, the inventors believe that the association of low oxygen content of the calcining atmosphere, the mild temperature of the calcination, the relatively low temperature of heating elements, and a controlled residence time of oil shales in the calcining drum enable to reach a low volatile organic compounds concentration.

The following examples will show more precisely the amount of volatile organic compounds obtained in a rotary heated drum.

### Example 1

Indirect heating rotary calciner heated with oil.

Influence of the oxidizing atmosphere on volatile organic compounds.

A laboratory borosilicate glass flask of 0.5 liter volume is mounted on a rotary axe. It is introduced in a hot oil bath heated at 200°C, in order to cover half of the surface of the glass flask.

A rotary engine is used in order to obtain a rolling mass of solid inside the glass flask when crushed trona is introduced.

A gas vector is injected in the glass flask and then pumped out in order to analyze on stream the amount of volatile organic compounds generated. A heat traced line at 180°C is used up to a calibrated Flame Ionization Analyzer, used to measure on-stream the amount of volatile organic compounds (VOC), with a continuous monitoring. Measurement protocol is done according EN13526 standard. The VOC amounts are integrated during the whole calcination of the product to give the total VOC generated during calcining. They are expressed as carbon amount and reported to the initial trona amount introduced in the flask.

400 grams sample of crushed trona under 0,3 mm size cut is divided into samples of 200 grams each. 200 grams of divided crushed trona are used for each trial. The samples are chemically analyzed after calcination to check the calcination.

Trial 1.a: the vector gas injected at a rate of 250 liters per hour is nitrogen (N₂): non oxidizing gas.

Trial 1.b: the vector gas injected at a rate of 250 liters per hour is air.

**TABLE 2**

| Trial | Vector gas | Calcination time | Total VOC | Total VOC mg C/ kg |
|---|---|---|---|---|
| | | minutes | mg C/ kg trona | generated CO₂ |
| 1.a | N₂ | 54 | 19 | 210 |
| 1.b | Air | 33 | 25 | 276 |

### Example 2

Indirect heating rotary calciner.

In this example, a rotary calcining device is used. Its main characteristics are: 0.4 meter diameter, 3.2 meters long, made from stainless steel, equipped internally with twelve 2.8 meters long smooth steam tubes; steam tubes are fed with pressurized steam at 20, 33 or 40 bars, to heat the calciner. The calciner is continuously fed with crushed trona inferior to 0.7 mm (1/4 inch), in order to establish a permanent regime and run continuously on week basis. The crushed trona flow rate feeding the rotary calciner is monitored. The crushed trona feed rate is regulated for each operating conditions in order to have less than 1 weight % of non calcined sesquicarbonate at the calciner outlet. Air entries are limited in order to obtain a carbon dioxide concentration superior to 25 volume % on dry gas. The gas generated in the rotary calciner is pumped out, and monitored continuously by a calibrated mass flow meter, with also gas pressure and gas temperature monitoring. An isokinetic sampling heated train (above 150°C) is used to sample continuously the gas generated by trona calcination. The VOC (= total hydrocarbon compounds) concentration of the sampled gas is monitored continuously during one hour on a calibrated Flame Ionization Analyzer according EN13526 standard. The mean value total hydrocarbon during one hour is taken as the amount of generated of VOC, multiplied by the total gas flowrate generated by the rotary calciner. This amount is reported to mass flow of incoming crushed trona during the same time, and to the equivalent generated carbon dioxide.

Table 3 gives the VOC released by trona calcining on several operating conditions.

**TABLE 3**

| Steam Pressure | Rotary speed | Total VOC released reported to calciner feed | Total VOC released reported to generated CO₂ |
|---|---|---|---|
| Bar | Rpm | mg C/kg trona | mg C/kg CO₂ |
| 21 | 6 | 3 | 33 |
| 33 | 6 | 28 | 310 |
| 33 | 11 | 21 | 230 |
| 40 | 6 | 18 | 200 |

In tested conditions, the total VOC released reported to trona is in between 3 and 28 mg C/ kg trona, corresponding to 33 to 310 mg C/ kg CO₂.

After three months operation, the heating tubes are clean and no crust is observed on their surface.

### Example 3 (counter example)

Industrial direct firing rotary calciners.

In this example direct firing rotary calciners as described in Natural Soda Ash, D.E. Garett, Ed Van Nostrand Reinhold editor, New York, 1992, Chapter 8 Production pp 272-273, are used and operated by coal firing or natural gas firing with external fire boxes. The calciners are operated in co-current: hot gases are introduced at the same extremity as trona crushed ore introduction. Operating conditions are chosen in order to obtain less than 1% residual sodium sesquicarbonate in the calcined trona.

A sampling train is used in the calciners stack test locations as defined in Wyoming state Permit N° CT-1347. Environment Protection Agency Method 25A is used to determine total hydrocarbons (VOC) concentration measured by a calibrated Flame Ionization Analyzer. To convert the VOC concentration to mass flow rate, the volumetric gas flow rates were determine at the source. The following methods, as described in 40 CFR part 60, Appendix A and 40 CFR Part 51, Appendix M were used (Methods 1, 2, 3, 4, 25A) for sample and velocity traverse for stationary sources, determination of stack gas velocity, and volumetric flow rate type S Pitot tube, gas analysis for the determination of molecular weight, determination of moisture content in stack gases, determination of total gaseous organic concentration using a flame ionization analyzer. Three 60 minute test runs are performed and the mean value is taken to calculate emitted VOC reported to calciner feed flow rate. Standard deviation of three measure are below +/- 17% of the average measure.
Example 3.a: Coal direct firing calciner, 14,5 feet diameter, 110 feet long, fed at 120 t crushed trona inferior to 0.7 mm (1/4 inch) per hour.
VOC generated in gas: 210 mg C/ kg trona, corresponding to 2320 mg C/ kg of generated CO₂ from trona ore.
Example 3.b: Natural Gas firing calciner, 18.5 feet diameter, 120 feet long, fed at 230 t crushed trona inferior to 0.7 mm (1/4 inch) per hour.
Carbon dioxide concentration is 12.4 volume % on dry gas.
VOC generated in gas is 85 mg C/ kg trona, corresponding to 940 mg C/ kg generated CO₂.

Values of generated organic of Examples 1 and 2 (33 to 310 mg C/ kg generated CO₂) according present described invention, compared to values in existing direct firing calciners of Example 3 (940 to 2320 mg C/ kg trona) show the efficiency of reducing the volatile organic compounds in using present invention.

Preferably the amount of air introduced in the calcining device as described in present invention is such that produced calcined trona gas has a carbon dioxide concentration of more than 25 volume % expressed on dry gas and a volatile organic compound amount of less than 650 mg per kilogram of generated carbon dioxide from trona ore. The air amount in the calcining device can be further reduced such that produced calcined trona gas has a carbon dioxide concentration of more than 40 volume % expressed on dry gas and a volatile organic compound amount of less than 550 mg per kilogram of generated carbon dioxide. Preferably the air amount in the calcining device is reduced such that produced calcined trona gas has a carbon dioxide concentration of more than 60 volume % expressed on dry gas and a volatile organic compound amount of less than 450 mg per kilogram of generated carbon dioxide. And most preferably the air amount in the calcining device is reduced such that produced calcined trona gas has a carbon dioxide concentration of more than 80 volume % expressed on dry gas, and a volatile organic compound amount of less than 350 mg per kilogram of trona ore.

The calcined gas can also be further processed with complementary steps selected from drying step, concentration step, odor removal purification step, and combination thereof.

Examples of known techniques of drying the gas are : cooling it a low temperature, or passing it through an activated alumina, bauxite, or silica gel drier that are regenerated by heating, or scrubbing it into concentrated sulfuric acid such as Reich process. Example of known techniques of concentrating the gas is amine concentration techniques as Girbotol recovery unit. Example of odor removal purification is active carbon filtrations such as Backus process, or gas scrubbing into potassium chromate or permanganate to remove trace of organics and hydrogen sulfide.

The purified carbon dioxide can be then further cooled and compressed to obtain liquid or solidified carbon dioxide.

## Claims

1. Process for producing a gas from a mineral ore, and in particular from trona ore, said gas having a carbon dioxide concentration of more than 25 volume percents expressed on dry gas, and a quantity of volatile organic compounds of less than 700 mg per kilogram of generated carbon dioxide, comprising the steps of :
a) crushing the trona ore
b) introducing crushed trona in a calcining device
c) extracting from calcining device the calcined trona
d) extracting from calcining device the gas generated by the trona ore calcination in order to constitute the produced gas.
wherein said calcining device is a rotary drum with indirect heating.
The process of claim 1, wherein the produced gas has a carbon dioxide concentration of more than 40 volume percents expressed on dry gas, and a quantity of volatile organic compounds of less than 550 mg per kilogram of generated carbon dioxide.

2. The process of claim 2, wherein the produced gas has a carbon dioxide concentration of more than 60 volume percents expressed on dry gas, and a quantity of volatile organic compounds of less than 450 mg per kilogram of generated carbon dioxide.

3. The process of claim 3, wherein the produced gas has a carbon dioxide concentration of more than 80 volume percents expressed on dry gas, and a quantity of volatile organic compounds of less than 350 mg per kilogram of generated carbon dioxide.

4. Process according to claim 1, wherein the crushed trona ore is pre-heated at a temperature above about 70°C before it is introduced in the calcining device.

5. Process according to claim 1, wherein the crushed trona is introduced in the rotary drum with a device, the outer surface of which is heated above about 70°C.

6. Process according to claim 1, wherein heating is provided by steam tubes.

7. A process according to claim 7, wherein the crushed trona ore is introduced in the calciner device inside the steam tubes zone.

8. A process according to claim 1, wherein the gas extracted from step d) further comprises the steps of :
e) removing part of solid particles
f) removing part of the water vapor.

9. A process according to claim 9 wherein the gas extracted from step f) further comprises one or several steps selected from purification, concentration, carbon dioxide liquefaction and combinations thereof.

10. A process according to claims 9 or 10, wherein the obtained gas is used for sodium bicarbonate production.

11. A process according to claims 1 or 7, wherein the calcined trona of step c) is further processed into sodium carbonate.

12. A process according to claim 7, wherein heating steam used in steam tubes is produced with an electricity and steam cogeneration power plant.

13. The gas obtainable by the process according to claims 1 to 13.

14. Use of the gas according to claim 14 for sodium bicarbonate production.
